# EUROPEAN PATENT APPLICATION

(11) **EP 4 411 005 A1**
(43) Date of publication of application: **07.08.2024**
(21) Application number: 24155141.5
(22) Date of filing: 31.01.2024
(51) Int. Cl.: C21D 1/04, C21D 1/26, C21D 1/42, C21D 9/00, H05B 6/02, F27B 17/00, F27D 99/00, C21D 11/00, H05B 6/06, H05B 6/10, H05B 6/44

(54) **SELECTIVE HEAT TREATMENT OF METALS USING MULTIPLE INDUCTION HEATING COILS**

(30) Priority: 01.02.2023 US 202318162860
(71) Applicant: RTX Corporation, Farmington, CT 06032 (US)
(72) Inventor: ANAHID, Masoud, Farmington, 06032 (US); MORDASKY, Matthew D., Farmington, 06032 (US); VENTURA, Anthony Patrick, Farmington, 06032 (US); FURRER, David U., Farmington, 06032 (US)
(74) Representative: Dehns

(57) **Abstract**

The present disclosure provides assemblies (10), systems and methods for a single-step process for selective heat treatment of metals (16). More particularly, the present disclosure provides assemblies (10), systems and methods for a single-step process for selective heat treatment of metals (16) using multiple induction heating coils (12, 14). A hybrid modeling-test approach can be used in the design process to improve or optimize the process parameters to achieve location specific and improved/optimal microstructure and residual stress to enhance the part performance. It is also noted that performing the selective heat treatment in a single step can reduce the cycle time significantly. Moreover, large thermal gradients can be avoided in the part (16) as different volumes (22, 24) of the part (16) are heated to their desired temperature simultaneously.

## Description

### TECHNICAL FIELD

The present disclosure relates to assemblies, systems and methods for a single-step process for selective heat treatment of metals and, more particularly, to assemblies, systems and methods for a single-step process for selective heat treatment of metals using multiple induction heating coils.

### BACKGROUND

In general, there are existing dual heat treatment practices including a two-step process to produce dual property turbine disks. This can involve heat treating the entire part at a sub-solvus temperature, followed by re-solutioning the rim at a super-solvus temperature. Such process can produce the desired grain size in the bore and rim, but the microstructure in the transition zone is overaged/under-solutioned. This approach is experience-based and only considers the grain size in the design process.

### BRIEF DESCRIPTION

The present disclosure provides assemblies, systems and methods for a single-step process for selective heat treatment of metals. More particularly, the present disclosure provides assemblies, systems and methods for a single-step process for selective heat treatment of metals using multiple induction heating coils. It is noted that there is currently no conventional technology that utilizes multiple heating sources in a single step for the selective heat treatment of metals.

The present disclosure provides for a heat treatment assembly including a first induction heating coil and a second induction heating coil, the first induction heating coil configured to be positioned relative to a first portion of a metal component, and the second induction heating coil configured to be positioned relative to a second portion of the metal component; and wherein the first and second induction heating coils are configured and dimensioned to provide selective heat treatment to the first and second portions of the metal component in a single-step process.

In addition to one or more of the features described, or as an alternative to any of the foregoing, the first and second induction heating coils are independent of one another; and wherein the first induction heating coil is in communication with a first power supply, and the second induction heating coil is in communication with a second power supply.

In addition to one or more of the features described, or as an alternative to any of the foregoing, the first and second induction heating coils are configured and dimensioned to provide selective heat treatment to the first and second portions of the metal component in a single-step process to achieve location specific microstructure and mechanical properties of the first and second portions of the metal component.

In addition to one or more of the features described, or as an alternative to any of the foregoing, wherein a hybrid modeling-test approach is utilized to achieve location specific microstructure and mechanical properties of the first and second portions of the metal component.

In addition to one or more of the features described, or as an alternative to any of the foregoing, wherein an amperage, geometry or location for the first and second induction heating coils is independently controlled to achieve location specific microstructure and mechanical properties of the first and second portions of the metal component.

In addition to one or more of the features described, or as an alternative to any of the foregoing, the first induction heating coil is configured to heat the first portion of the metal component to a first temperature in the single-step process; and wherein the second induction heating coil is configured to heat the second portion of the metal component to a second temperature in the single-step process.

In addition to one or more of the features described, or as an alternative to any of the foregoing, the first temperature is different than the second temperature.

In addition to one or more of the features described, or as an alternative to any of the foregoing, the metal component comprises a nickel-chromium alloy, and wherein the first induction heating coil is configured to heat the first portion of the nickel-chromium alloy to a super-solvus temperature in the single-step process; and wherein the second induction heating coil is configured to heat the second portion of the nickel-chromium alloy to a sub-solvus temperature in the single-step process.

In addition to one or more of the features described, or as an alternative to any of the foregoing, the metal component comprises a nickel-chromium alloy, and wherein the first induction heating coil is configured to heat the first portion of the nickel-chromium alloy to a sub-solvus temperature in the single-step process; and wherein the second induction heating coil is configured to heat the second portion of the nickel-chromium alloy to a super-solvus temperature in the single-step process.

In addition to one or more of the features described, or as an alternative to any of the foregoing, the first and second induction heating coils are configured and dimensioned to provide selective heat treatment to the first and second portions of the metal component in a simultaneous single-step process.

The present disclosure also provides for a method for selective heat treatment including positioning a first induction heating coil relative to a first portion of a metal component; positioning a second induction heating coil relative to a second portion of the metal component; and providing selective heat treatment to the first and second portions of the metal component, via the first and second induction heating coils, in a single-step process.

In addition to one or more of the features described, or as an alternative to any of the foregoing, the first and second induction heating coils are independent of one another; and wherein the first induction heating coil is in communication with a first power supply, and the second induction heating coil is in communication with a second power supply.

In addition to one or more of the features described, or as an alternative to any of the foregoing, wherein providing selective heat treatment to the first and second portions of the metal component, via the first and second induction heating coils, in the single-step process achieves location specific microstructure and mechanical properties of the first and second portions of the metal component.

In addition to one or more of the features described, or as an alternative to any of the foregoing, further comprising utilizing a hybrid modeling-test approach to achieve location specific microstructure and mechanical properties of the first and second portions of the metal component.

In addition to one or more of the features described, or as an alternative to any of the foregoing, further comprising independently controlling an amperage, geometry or location for the first and second induction heating coils to achieve location specific microstructure and mechanical properties of the first and second portions of the metal component.

In addition to one or more of the features described, or as an alternative to any of the foregoing, the first induction heating coil heats the first portion of the metal component to a first temperature in the single-step process; and wherein the second induction heating coil heats the second portion of the metal component to a second temperature in the single-step process.

In addition to one or more of the features described, or as an alternative to any of the foregoing, the first temperature is different than the second temperature.

In addition to one or more of the features described, or as an alternative to any of the foregoing, the metal component comprises a nickel-chromium alloy, and wherein the first induction heating coil heats the first portion of the nickel-chromium alloy to a super-solvus temperature in the single-step process; and wherein the second induction heating coil heats the second portion of the nickel-chromium alloy to a sub-solvus temperature in the single-step process.

In addition to one or more of the features described, or as an alternative to any of the foregoing, the metal component comprises a nickel-chromium alloy, and wherein the first induction heating coil heats the first portion of the nickel-chromium alloy to a sub-solvus temperature in the single-step process; and wherein the second induction heating coil heats the second portion of the nickel-chromium alloy to a super-solvus temperature in the single-step process.

In addition to one or more of the features described, or as an alternative to any of the foregoing, the first and second induction heating coils provide selective heat treatment to the first and second portions of the metal component in a simultaneous single-step process.

The above described and other features are exemplified by the following figures and detailed description.

Any combination or permutation of embodiments is envisioned. Additional features, functions and applications of the disclosed assemblies, systems and methods of the present disclosure will be apparent from the description which follows, particularly when read in conjunction with the appended figures.

### BRIEF DESCRIPTION OF THE DRAWINGS

The following figures are example embodiments wherein the like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various steps, features and combinations of steps/features described below and illustrated in the figures can be arranged and organized differently to result in embodiments which are still within the scope of the present disclosure. To assist those of ordinary skill in the art in making and using the disclosed assemblies, systems and methods, reference is made to the appended figures, wherein:
FIG. 1 is a schematic of an example heat treatment assembly, according to the present disclosure;
FIG. 2 shows the steady state temperatures achieved in the component at the end of the heating cycle along with the electron backscatter diffraction (EBSD) maps of the microstructure at the two ends of the component;
FIG. 3 depicts the maximum Feret diameter map in the transition zone of the component, which shows a gradual grain size increase from right to left.

### DETAILED DESCRIPTION

The example embodiments disclosed herein are illustrative of assemblies for a single-step process for selective heat treatment of metals, and systems of the present disclosure and methods/techniques thereof. It should be understood, however, that the disclosed embodiments are merely examples of the present disclosure, which may be embodied in various forms. Therefore, details disclosed herein with reference to example assemblies for a single-step process for selective heat treatment of metals and associated processes/techniques of fabrication/assembly and use are not to be interpreted as limiting, but merely as the basis for teaching one skilled in the art how to make and use the assemblies/systems and/or alternative assemblies/systems of the present disclosure.

The present disclosure provides assemblies, systems and methods for a single-step process for selective heat treatment of metals.

More particularly, the present disclosure provides assemblies, systems and methods for a single-step process for selective heat treatment of metals using multiple induction heating coils.

The present disclosure provides assemblies, systems and methods for using multiple induction heating coils in a single step for selective heat treatment of metals in order to achieve location specific microstructure and mechanical properties.

There is currently no conventional technology that utilizes multiple induction heating coils in a single process to produce parts with location specific properties.

In example embodiments of the present disclosure, low frequency induction coils can be utilized to produce deep heat profiles without overheating the surface features in the parts with complex geometries. Moreover, the induction coils of the present disclosure provide quick thermal processing which results in reduced cycle time.

The assemblies, systems and methods of the present disclosure have a broad applicability to various products where location specific properties are desired. It is noted that a hybrid modeling-test approach can be used in the design process to improve or optimize the process parameters to achieve location specific and improved/optimal microstructure and residual stress to enhance the part performance. It is also noted that performing the selective heat treatment in a single step can reduce the cycle time significantly. Moreover, large thermal gradients can be avoided in the part as different volumes of the part are heated to their desired temperature simultaneously.

It is noted that there have been different dual heat treatment methods to produce dual property turbine disks. For example, a thermal gradient can be created in the part by using active cooling on the bore of the disk when it is placed into a conventional furnace or within an induction coil. See, for example, U.S. Patent Nos. 5,312,497 and 5,527,020, the entire contents of each incorporated herein by reference in their entireties.

While these approaches produce the desired dual microstructure in the disk, fine grain bore and coarse grain rim, they add to the cost and complexity of the solution heat treatment. They also can require specialized air pressure lines going into a furnace that must remain operable for process viability. Another method involves insulating volumes to manage an optimal solution temperature for each volume.

There are existing dual heat treatment practices involving multiple heating sources. However, these processes are done in multiple steps with a single heating source used in each step.

An example is a dual heat treatment process to produce dual property turbine disks. To achieve the properties in the bore, the entire part is heat treated sub-solvus first in a conventional furnace. In the second phase the rim is re-solutioned super-solvus using a local induction heating coil. The part is then aged after the dual-property heat treatment. This process does produce a fine grain structure in the bore and a coarse grain in the rim. However, the induction heating process creates a large thermal gradient from rim to the bore that produces a transition zone that is overaged/under-solutioned. This approach is experience-based and only considers the grain size in the design process. Precipitate size and residual stress are two other important characteristics which can significantly impact the part performance and are not necessarily optimized in the conventional process. The conventional method also results in increased cycle time as the heat treatment process is done in two steps. As such and as noted, there is currently no conventional technology that utilizes multiple heating sources in a single step for the selective heat treatment of metals.

The present disclosure provides for using multiple induction heating coils in a single step to perform a selective heat treatment with the goal of achieving location specific microstructure and mechanical properties. This technique works by heating different volumes of the part to their desired temperature simultaneously. In this method, the amperage, geometry and location for each induction heater can be optimized independently to achieve the required multi-temperature in the part. The assemblies, systems and methods of the present disclosure can be integrated with modeling to provide an engineered design system to optimize the process based on requirements of grain size, precipitation size and/or residual stress.

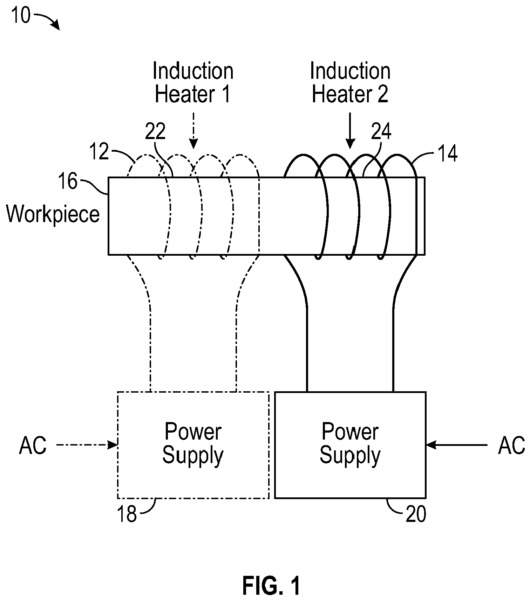

FIG. 1 is a schematic of an example heat treatment assembly 10, according to the present disclosure. In example embodiments, heat treatment assembly 10 includes a first heating source 12 and a second heating source 14. In general and as discussed further below, the first and second heating sources 12, 14 are configured and dimensioned to provide selective heat treatment to a metal component 16 in a single-step process.

As shown in FIG. 1, example first heating source 12 can take the form of an induction heater (e.g., induction heating coil), and the second heating source 14 can take the form of an induction heater (e.g., induction heating coil).

Example first induction heating coil 12 can be in communication with a first power supply 18 (e.g., AC power supply), and second induction heating coil 14 can be in communication with a second power supply 20 (e.g., AC power supply). In example embodiments, the first and second induction heating coils 12, 14 are independent of one another.

As shown in FIG. 1, example first induction heating coil 12 can be positioned relative to a first portion/volume 22 of the metal component 16, and the example second induction heating coil 14 can be positioned relative to a second portion/volume 24 of the metal component 16.

As such, the first and second induction heating coils 12, 14 of heat treatment assembly 10 can be utilized in a single-step process to provide selective heat treatment to metal component 16 (e.g., to achieve location specific microstructure and mechanical properties of metal component 16). This technique via heat treatment assembly 10 can operate by heating the different volumes 22, 24 of the component/part 16 to their respective (different, or similar) desired temperatures simultaneously (and in a single-step process). It is noted that a hybrid modeling-test approach can be used in the design process of assembly 10 to optimize the heating and cooling processes to achieve location specific and optimal microstructure and residual stress of metal component 16.

As such, FIG. 1 demonstrates a schematic of an example heat treatment assembly 10 with two independent induction heaters 12, 14. With respect to example heat treatment assembly 10, it is noted that process parameters and/or coil geometry and location for each induction heater 12, 14 can be utilized/optimized independently to achieve the required dual temperature in the portions 22, 24 of the component/part 16.

Moreover, the amperage, geometry and/or location for each induction heater 12, 14 can be optimized independently to achieve the required multi-temperature in the component/part 16. The assemblies 10, systems and methods of the present disclosure can be integrated with modeling to provide an engineered design system to optimize the process based on requirements of grain size, precipitation size and/or residual stress.

With proper design of the coils 12, 14, a nickel-chromium alloy specimen/component 16 was heat treated sub-solvus in one end (second portion 24) and super-solvus in the other end (first portion 22).

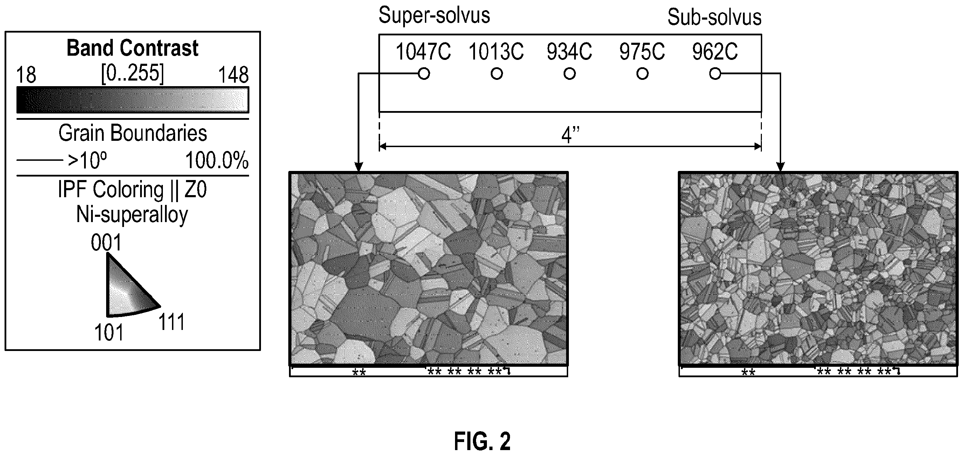

FIG. 2 shows the steady state temperature achieved in the specimen 16 at the end of the heating cycle along with the electron backscatter diffraction (EBSD) maps of the microstructure at the two ends 22, 24 of the component/specimen 16. As evident from FIG. 2, there is a clear grain size increase from the cooler side to the hotter side of the bar.

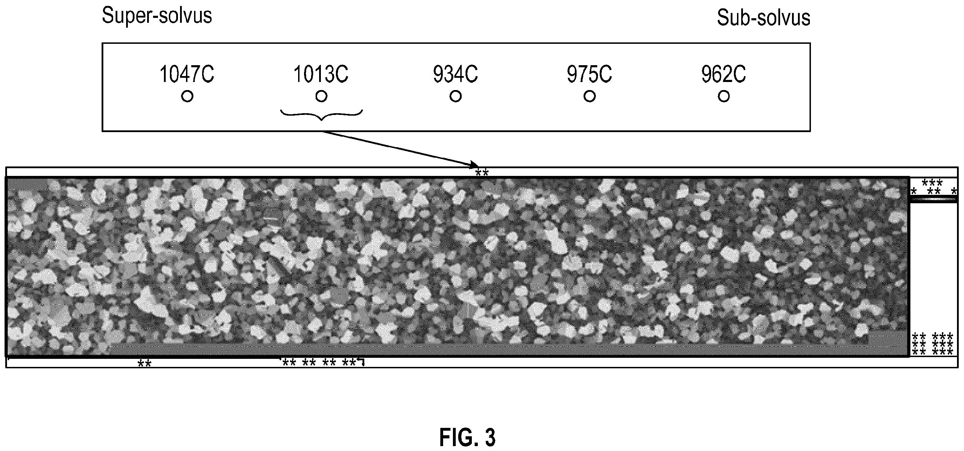

FIG. 3 depicts the maximum Feret diameter map in the transition zone, which shows a gradual grain size increase from right to left (about 1 ASTM grain size number).

The proper grain structure profile can be specified by the material properties required in the part 16 and can be different from one part 16 to another. The multi-coil 12, 14 heat treatment process of assembly 10 can be optimized to achieve the desired microstructure profile based on property requirements in the component/part 16.

There are many benefits of the assemblies, systems and methods of the present disclosure, including, without limitation: providing for improved quality parts by enhancing the microstructure in the transition zone by eliminating the large thermal gradient which occurs using existing dual heat treat techniques; provides for significant reduction in cycle time as the selective heat treatment is performed in a single process; can be integrated with modeling to provide an engineered design system to optimize and/or improve the process based on requirements of microstructure (e.g., grain size, precipitation size) and/or residual stress; using induction heaters with low frequency can create uniform and deep heating patterns in the part and this increases the efficiency of the heating system and results in better microstructure for parts with complex geometries; and/or induction coils provide quick thermal processing which results in reduced cycle time.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Although the systems and methods of the present disclosure have been described with reference to example embodiments thereof, the present disclosure is not limited to such example embodiments and/or implementations. Rather, the systems and methods of the present disclosure are susceptible to many implementations and applications, as will be readily apparent to persons skilled in the art from the disclosure hereof. The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A heat treatment assembly (10) comprising:
a first induction heating coil (12) and a second induction heating coil (14), the first induction heating coil (12) configured to be positioned relative to a first portion (22) of a metal component (16), and the second induction heating coil (14) configured to be positioned relative to a second portion (24) of the metal component (16); and
wherein the first and second induction heating coils (12, 14) are configured and dimensioned to provide selective heat treatment to the first and second portions (22, 24) of the metal component (16) in a single-step process.

2. The heat treatment assembly of claim 1, wherein the first and second induction heating coils (12, 14) are configured and dimensioned to provide selective heat treatment to the first and second portions (22, 24) of the metal component (16) in a single-step process to achieve location specific microstructure and mechanical properties of the first and second portions (22, 24) of the metal component (16), optionally wherein a hybrid modeling-test approach is utilized to achieve location specific microstructure and mechanical properties of the first and second portions (22, 24) of the metal component (16).

3. The heat treatment assembly of claim 2, wherein an amperage, geometry or location for the first and second induction heating coils (12, 14) is independently controlled to achieve location specific microstructure and mechanical properties of the first and second portions (22, 24) of the metal component (16).

4. The heat treatment assembly of any preceding claim, wherein the first induction heating coil (12) is configured to heat the first portion (22) of the metal component (16) to a first temperature in the single-step process; and
wherein the second induction heating coil (14) is configured to heat the second portion (24) of the metal component (16) to a second temperature in the single-step process, optionally wherein the first temperature is different than the second temperature.

5. The heat treatment assembly of any preceding claim, wherein either:
the metal component (16) comprises a nickel-chromium alloy, the first induction heating coil (12) is configured to heat the first portion (22) of the nickel-chromium alloy to a super-solvus temperature in the single-step process, and the second induction heating coil (14) is configured to heat the second portion (24) of the nickel-chromium alloy to a sub-solvus temperature in the single-step process; or
the metal component (16) comprises a nickel-chromium alloy, the first induction heating coil (12) is configured to heat the first portion (22) of the nickel-chromium alloy to a sub-solvus temperature in the single-step process, and the second induction heating coil (14) is configured to heat the second portion (24) of the nickel-chromium alloy to a super-solvus temperature in the single-step process.

6. The heat treatment assembly of any preceding claim, wherein the first and second induction heating coils (12, 14) are configured and dimensioned to provide selective heat treatment to the first and second portions (22, 24) of the metal component (16) in a simultaneous single-step process.

7. A method for selective heat treatment comprising:
positioning a first induction heating coil (12) relative to a first portion (22) of a metal component (16);
positioning a second induction heating coil (14) relative to a second portion (24) of the metal component (16); and
providing selective heat treatment to the first and second portions (22, 24) of the metal component (16), via the first and second induction heating coils (12, 14), in a single-step process.

8. The method of claim 7 or heat treatment assembly of any preceding claim, wherein the first and second induction heating coils (12, 14) are independent of one another; and
wherein the first induction heating coil (12) is in communication with a first power supply (18), and the second induction heating coil (14) is in communication with a second power supply (20).

9. The method of claim 7 or 8, wherein providing selective heat treatment to the first and second portions (22, 24) of the metal component (16), via the first and second induction heating coils (12, 14), in the single-step process achieves location specific microstructure and mechanical properties of the first and second portions (22, 24) of the metal component (16).

10. The method of claim 9, further comprising utilizing a hybrid modeling-test approach to achieve location specific microstructure and mechanical properties of the first and second portions (22, 24) of the metal component (16).

11. The method of claim 9 or 10, further comprising independently controlling an amperage, geometry or location for the first and second induction heating coils (12, 14) to achieve location specific microstructure and mechanical properties of the first and second portions (22, 24) of the metal component (16).

12. The method of any of claims 7 to 11, wherein the first induction heating coil (12) heats the first portion (22) of the metal component (16) to a first temperature in the single-step process; and
wherein the second induction heating coil (12) heats the second portion (22) of the metal component (16) to a second temperature in the single-step process, optionally wherein the first temperature is different than the second temperature.

13. The method of any of claims 7 to 12, wherein the metal component (16) comprises a nickel-chromium alloy, and wherein the first induction heating coil (12) heats the first portion (22) of the nickel-chromium alloy to a super-solvus temperature in the single-step process; and
wherein the second induction heating coil (14) heats the second portion (24) of the nickel-chromium alloy to a sub-solvus temperature in the single-step process.

14. The method of any of claims 7 to 12, wherein the metal component (16) comprises a nickel-chromium alloy, and wherein the first induction heating coil (12) heats the first portion (22) of the nickel-chromium alloy to a sub-solvus temperature in the single-step process; and
wherein the second induction heating coil (14) heats the second portion (24) of the nickel-chromium alloy to a super-solvus temperature in the single-step process.

15. The method of any of claims 7 to 14, wherein the first and second induction heating coils (12, 14) provide selective heat treatment to the first and second portions (22, 24) of the metal component (16) in a simultaneous single-step process.
